# EUROPEAN PATENT APPLICATION

(11) **EP 3 795 272 A1**
(43) Date of publication of application: **24.03.2021**
(21) Application number: 20188409.5
(22) Date of filing: 29.07.2020
(51) Int. Cl.: B21J 1/06, B21J 5/02, B21K 1/56, B21K 1/64, B21K 1/68, B21K 1/70, F16B 37/00, G01P 3/487, C21D 6/00

(54) **NUT-SHAPED FCC MAGNET AND METHOD FOR MANUFACTURING THE SAME**

(30) Priority: 20.09.2019 JP 2019171807
(71) Applicant: Hitachi Metals, Ltd., Tokyo 108-8224 (JP)
(72) Inventor: Okamura, Nobuyuki, Osaka, Osaka 564-0002 (JP)
(74) Representative: Diehl & Partner

(57) **Abstract**

A method for manufacturing a nut-shaped FCC magnet of the present disclosure includes: producing a rod-shaped FCC-based alloy from an Fe-Cr-Co-based alloy material containing 5% to 14% by mass of Co, 20% to 40% by mass of Cr, 5% or less of an additional element, with the balance being Fe; producing a nut-shaped FCC-based alloy having a through hole therein by cold closed die forging from the rod-shaped FCC-based alloy; and performing a heat treatment on the nut-shaped FCC-based alloy, thereby obtaining the nut-shaped FCC magnet.

## Description

### BACKGROUND

### 1. Technical Field:

The present disclosure relates to a nut-shaped FCC magnet for use in a magnetically-sensed member of a rotational speed sensor for a turbocharger, for example.

### 2. Description of the Related Art:

A turbocharger is a supercharger for increasing the density of the air to be taken into the engine of an automobile, thereby sending more oxygen into the combustion chamber, thus realizing a high combustion energy. A typical turbocharger includes a turbine that receives the flow of the exhaust gas to rotate at a high speed, a shaft that transmits the high-speed rotation of the turbine, and a compressor that is driven by being linked to the shaft. As a performance test of a turbocharger, the number of revolutions of the rotating portion (rotor) of the turbocharger is measured. The term "number of revolutions" as used herein means the "number of revolutions per unit time", and is referred to also as the "rotational speed". The rotational speed of the rotor is determined by sensing the rotation of the rotor by a sensor. Since the rotor of the turbocharger rotates at a high speed and it is therefore difficult to optically sense the rotation, the rotation has been sensed by using a magnetic sensor.

Such magnetic sensors are disclosed in Japanese Laid-Open Patent Publication Nos. H10-206447 and 2017-90191 and International Publication WO2018/105692 pamphlet (hereinafter Patent Document Nos. 1 to 3). These magnetic sensors each use a permanent magnet as a rotating member (sensed member) that rotates together with the rotor.

Patent Document No. 1 describes a fixed magnetized nut that is screwed to an end portion of the rotating shaft of the rotating member. Patent Document Nos. 2 and 3 disclose that an Fe-Cr-Co magnet (FCC magnet) can be preferably used as such a magnet having a nut shape. In the present specification, an FCC magnet having a "nut shape" that can be screwed to an end portion of the rotating member will be referred to simply as a "nut-shaped FCC magnet".

Patent Document No. 2 describes producing a nut-shaped FCC magnet by casting, and Patent Document No. 3 describes producing a nut-shaped FCC magnet by cutting.

Japanese Laid-Open Patent Publication No. 2001-172751 (hereinafter Patent Document No. 4) describes an Fe-based heat-resistant alloy for an engine valve with an improved cold forgeability. This Fe-based heat-resistant alloy contains Cr and Co.

Japanese Laid-Open Patent Publication No. H05-298627 (hereinafter Patent Document No. 5) describes forming grooves in an FCC magnet by forging.

### SUMMARY

In recent years, the rotational speed of a turbocharger has increased to a level of 350,000 rpm at maximum, for example. When a rotating member with a magnet screwed thereto is rotated at such a high rotational speed, the magnet undergoes a large load (centrifugal force or stress). While automobiles with electrified powertrain (Electric Vehicles) continue to gain popularity, there is a demand for new values added to turbochargers in order to promote sales of automobiles with turbochargers, which use an engine as the driving source. While magnetic sensors have only been installed on turbochargers for performance test, it is expected in the future that every car with a turbocharger sold on the market will have a magnetic sensor installed on the turbocharger. When mass production of magnetic sensors starts, there will be an increased demand for magnets to be screwed to the rotating member, and there will be a demand for reducing the cost therefor.

According to the casting process described in Patent Document No. 2, it is possible to manufacture a large quantity of nut-shaped FCC magnets using a casting sand mold. However, a magnet used for detecting the rotational speed of a turbocharger is as small as about 1 cm, and the total volume of the runner of the casting sand mold will exceed the total volume of the space that defines the nut-shaped FCC magnet. This lowers the usage efficiency (yield) of the magnet material, thus making it difficult to realize low-cost mass production.

Manufacturing nut-shaped FCC magnets by the cutting process described in Patent Document No. 3 has the following problem. An FCC-based alloy is a ductile material. Because of the high ductility, an FCC-based alloy, when subjected to a cutting process, expands in the direction perpendicular to the direction it is pressed by the grinder, thus lowering the process efficiency. When the process is performed with an increased pressure (strong machining), microcracks may occur, thereby lowering the mechanical strength. Although there will be no cracks if the process is performed with a lowered pressure, it will increase the time required for the cutting process, thereby significantly lowering the production efficiency.

An embodiment of the present disclosure provides a nut-shaped FCC magnet and a method for manufacturing the same, with which it is possible to manufacture, at a low cost, a nut-shaped FCC magnet that is strong enough to endure high-speed rotation.

In an illustrative embodiment, a method for manufacturing a nut-shaped FCC magnet of the present disclosure includes: producing a rod-shaped FCC-based alloy from an Fe-Cr-Co-based alloy material containing 5% to 14% by mass of Co, 20% to 40% by mass of Cr, 5% or less of an additional element, with the balance being Fe; producing a nut-shaped FCC-based alloy having a through hole therein by cold closed die forging from the rod-shaped FCC-based alloy; and performing a heat treatment on the nut-shaped FCC-based alloy, thereby obtaining the nut-shaped FCC magnet.

In one embodiment, the method includes performing a thread cutting process of forming a thread on an inner wall of the through hole of the nut-shaped FCC alloy.

In one embodiment, a Vickers hardness of the rod-shaped FCC-based alloy before the cold closed die forging is 200 to 240 Hv.

In one embodiment, the step of producing the rod-shaped FCC-based alloy from the Fe-Cr-Co-based alloy material includes hot forging, hot rolling, peeling and cold drawing of an ingot of the Fe-Cr-Co-based alloy material.

In one embodiment, in the step of producing the rod-shaped FCC-based alloy from the Fe-Cr-Co-based alloy material, a Vickers hardness of the rod-shaped FCC-based alloy is controlled within a range of 200 to 240 Hv by adjusting a cooling rate after the hot forging and/or the hot rolling.

In one embodiment, the Fe-Cr-Co-based alloy material contains 8% to 12% by mass of Co, 20% to 30% by mass of Cr, 5% or less of an additional element, with the balance being Fe.

In one embodiment, the cooling rate after the hot forging and/or the hot rolling is 400°C/min to 1500°C/min.

In one embodiment, the heat treatment includes a solution treatment and a heat treatment in magnetic field.

In one embodiment, the heat treatment includes: performing a solution treatment at a temperature of 600°C or more and 950°C or less on the nut-shaped FCC-based alloy; performing a heat treatment in magnetic field at a temperature of 600°C or more and 700°C or less on the nut-shaped FCC-based alloy; and performing an aging process at a temperature of 400°C or more and 670°C or less on the nut-shaped FCC-based alloy.

In one embodiment, the method includes shipping the nut-shaped FCC magnet without performing a machining step and/or a demagnetization step after the aging process.

In one embodiment, the additional element is at least one element selected from the group consisting of Ti, Mo, V, Si and Al.

A nut-shaped FCC magnet of the present disclosure contains 5% to 14% by mass of Co, 20% to 40% by mass of Cr, 5% or less of an additional element, with the balance being Fe, and has a fiber flow that extends along an outer shape on an outer circumferential side of the nut shape.

In one embodiment, the nut-shaped FCC magnet includes: a plurality of side surfaces that define the nut shape; and a step portion that expands from the plurality of side surfaces in a direction perpendicular to a central axis of the nut-shaped FCC magnet, wherein the nut-shaped FCC magnet has a fiber flow that extends along an outer shape of the step portion.

According to an embodiment of the present disclosure, it is possible to realize a nut-shaped FCC magnet that has a good magnet strength and endures high-speed rotation, at a cost that is far lower as compared with casting or cutting.

### BRIEF DESCRIPTION OF THE DRAWINGS

FIG. **1A** is a plan view of a configuration example of a nut-shaped FCC magnet according to an embodiment of the present disclosure.
FIG. **1B** is a cross-sectional view taken along line B-B of FIG. **1A****.**
FIG. **2** is a side view of the nut-shaped FCC magnet of FIG. **1A****.**
FIG. **3** shows schematic cross sections of a nut-shaped FCC, being produced, according to the embodiment of the present disclosure.
FIG. **4** shows the fiber flow of a nut-shaped FCC magnet produced according to the manufacturing method of the present disclosure.

### DETAILED DESCRIPTION

Prior to the description of an embodiment of the present disclosure, the background and the findings by the present inventor will be described.

First, an FCC magnet will be described in greater detail. An FCC magnet can be manufactured by melting a metal material containing Fe, Cr and Co, cooling and solidifying the metal material, and then further subjecting the metal material to heat treatment processes such as a solution treatment, a heat treatment in magnetic field and an aging treatment. Through these heat treatment processes, spinodal decomposition occurs in the Fe-Cr-Co-based alloy, and ferromagnetic-phase single-domain fine particles precipitate in a non-magnetic matrix. When spinodal decomposition occurs, it is possible, by applying a magnetic field in a particular direction, to give magnetic anisotropy to the Fe-Cr-Co-based alloy. Hereinafter, an Fe-Cr-Co-based alloy before heat treatment processes will be referred to simply as an "FCC-based alloy", distinguishing it from an "FCC magnet".

An FCC magnet is manufactured without using a rare earth such as Nd, Dy and Tb, which are rare elements. Although the metal material of an FCC magnet contains Co, whose price is high and significantly variable, the Co content is one half or less of that of an alnico magnet, which is a typical metal alloy magnet. Moreover, although the intrinsic coercive force H_{cJ} of an FCC magnet is smaller than that of a ferrite magnet, the residual magnetic flux density Bᵣ of an FCC magnet is comparable to that of a rare earth magnet. The absolute value of the temperature coefficient for the residual magnetic flux density Bᵣ and the intrinsic coercive force H_{cJ} of an FCC magnet are small, and an FCC magnet can be used even under a high-temperature environment of about 500°C. With these characteristics, FCC magnets are used in a wide variety of products. With conventional FCC magnet manufacturing methods, it has been typical to perform the heat treatment described above on an FCC-based alloy, and then to finish the product through processes such as grinding and polishing.

With conventional FCC magnet manufacturing methods, cold forging is performed for the purpose of rolling, etc., of the FCC-based alloy. However, no manufacturing methods have been put in practical use that perform cold closed die forging in order to achieve a shape that is close to a final FCC magnet part that has a nut shape, for example, in other words, to form an individual piece. That is because an alloy with a high Cr content, such as an FCC-based alloy, has a poor forgeability. For example, Patent Document No. 4 states (although not for an FCC magnet per se) that for a heat-resistant alloy that contains Fe, Cr and Co, as does an FCC magnet, the cold workability (forgeability) becomes poor when the Cr content exceeds 18% by mass. It is also widely recognized that a stainless steel that contains about 17% to 18% by mass of Cr has a poor forgeability. An FCC-based alloy contains about 25% by mass of Cr, and this Cr content concentration is higher than those of an alloy of Patent Document No. 4 and a stainless steel. Therefore, the forgeability of an FCC-based alloy has been considered poor.

Despite such common general knowledge in the technical field, the present inventor studied the possibility of applying the "closed die forging", which is used to form individual pieces, to the manufacture of FCC magnets. Through various studies, the present inventor found the followings. It is possible to lower the hardness (Vickers hardness) of an FCC-based alloy to such a degree that cold closed die forging is applicable by controlling the composition range of the FCC-based alloy within a predetermined range and optimizing the conditions for heat treatment before cold closed die forging. Specifically, an FCC-based alloy of a predetermined composition following a preliminary hot rolling process is about 300 Hv in terms of Vickers hardness, and it is possible to bring the Vickers hardness to about 200 to 240 Hv by adjusting the cooling rate after hot rolling. Thus, by performing cold closed die forging using a forming force that is about 1.5 times that used when machining an iron material such as carbon steel, for example, it is possible to achieve production yield and efficiency that far exceed those of casting or cutting, though not as good as those achieved by cold closed die forging of an iron material.

Through further studies, the present inventor found the followings. The inner surface portion (screw thread portion) of the nut, which requires precise machining, can be realized by performing a "thread cutting process" after cold closed die forging. Moreover, an FCC magnet thus produced is strong enough to endure high-speed rotation. It is believed that this is because the crystalline structure obtained by forging (the fiber flow lines or the metal flow) contributes to the increase in strength. The fiber flow extends along the outer shape obtained by cold closed die forging, and can be observed on a cross section of the FCC magnet.

Thus, as a result of the studies by the present inventor, it was found that it is possible to manufacture a nut-shaped FCC magnet having a high strength at a lower cost than casting or cutting, by using "cold closed die forging", which has been considered not applicable to mass production.

### EMBODIMENTS

A method for manufacturing a nut-shaped FCC magnet according to an embodiment of the present disclosure will be described.

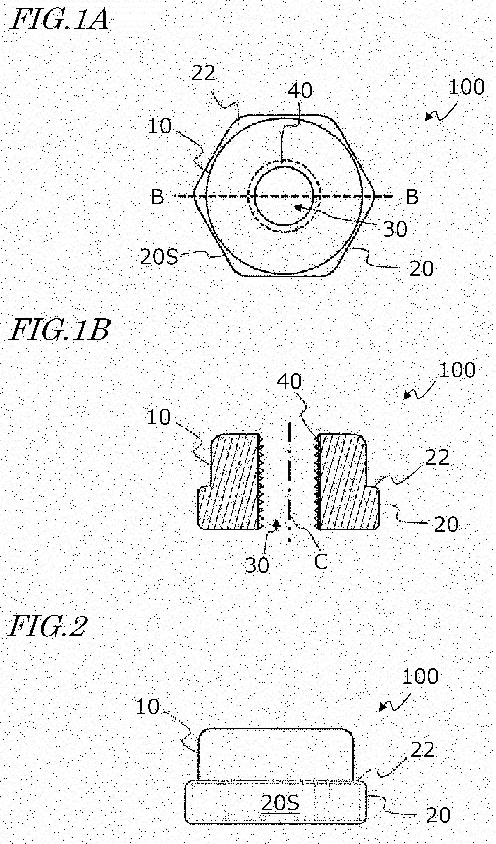

First, referring to FIG. **1A,** FIG. **1B** and FIG. **2****,** a configuration example of a nut-shaped FCC magnet that can be produced by the present embodiment will be described. FIG. **1A** is a plan view showing a configuration example of the nut-shaped FCC magnet, and FIG. **1B** is a cross-sectional view taken along line B-B of FIG. **1A.** FIG. **2** is a side view of the nut-shaped FCC magnet.

In the illustrated example, a nut-shaped FCC magnet **100** includes a cylindrical portion **10** whose shape is generally axially symmetrical with respect to the central axis **C,** and a base portion **20** having a plurality of side surfaces **20S.** In this example, the nut-shaped FCC magnet **100** has a "hexagon nut" structure, and the number of side surfaces **20S** is six. The structure of the nut-shaped FCC magnet **100** is not limited to a hexagon nut structure, and the number of side surfaces **20S** is not limited to six. The base portion **20** includes a step portion **22** that expands outward from the outer circumferential surface of the cylindrical portion **10.**

The nut-shaped FCC magnet **100** has a through hole **30** extending along the central axis **C,** with a female thread **40** formed on the inner circumferential surface of the through hole **30.** The female thread **40** is shaped so as to fit the male thread on a bolt-shaped structure (not shown).

The nut-shaped FCC magnet **100** of the present embodiment is entirely made of an FCC magnet containing 5% to 14% by mass of Co, 20% to 40% by mass of Cr, 5% by mass or less of an additional element, with the balance being Fe. The additional element is at least one element selected from the group consisting of Ti, Mo, V, Si and Al, for example. Note that a film, or the like, made of a material other than a magnet, may be provided on the surface of the nut-shaped FCC magnet **100.**

A method for manufacturing a nut-shaped FCC magnet **100** according to the present embodiment includes:
(A) producing a rod-shaped FCC-based alloy from an Fe-Cr-Co-based alloy material containing 5% to 14% by mass of Co, 20% to 40% by mass of Cr, 5% by mass or less of an additional element, with the balance being Fe;
(B) producing a nut-shaped FCC-based alloy having a through hole therein by cold closed die forging from the rod-shaped FCC-based alloy;
(C) performing a thread cutting process of forming a thread on an inner wall of the through hole of the nut-shaped FCC-based alloy; and
(D) performing a heat treatment on the nut-shaped FCC-based alloy having been subjected to the thread cutting process, thereby obtaining the nut-shaped FCC magnet.

Next, the steps will be described in detail.

In step (A), a rod-shaped FCC-based alloy is produced from an Fe-Cr-Co-based alloy material containing 5% to 14% by mass of Co, 20% to 40% by mass of Cr, 5% by mass or less of an additional element, with the balance being Fe. More specifically, an Fe-Cr-Co-based alloy material having a composition described above is produced by vacuum melting. A preferred range of Co concentration in the FCC-based alloy of the present embodiment is 8 to 12% by mass. A preferred range of Cr concentration is 20 to 30% by mass, and a more preferred range thereof is 22% to 28% by mass.

After an ingot of the FCC-based alloy is obtained by vacuum melting, the ingot is subjected sequentially to hot forging and hot rolling, thereby stretching the FCC-based alloy in the longitudinal direction. Hot forging and hot rolling may be performed at 800°C to 1300°C, for example. By adjusting the cooling rate used when cooling after the hot rolling, it is possible to lower the hardness of the FCC-based alloy. As for cooling, the FCC-based alloy after hot rolling is preferably cooled at a cooling rate of 400°C/min to 1500°C/min, and more preferably cooled at a cooling rate of 600°C/min to 1200°C/min. Specifically, the FCC-based alloy can be cooled by immersing the FCC-based alloy in a large amount of stirred cooling water at 15°C to 30°C, for example. The cooling rate affects the Vickers hardness of the FCC alloy as cooled. It has been found that it is preferable to quench the FCC alloy from a relatively high temperature in order to sufficiently reduce the Vickers hardness. The temperature of the FCC alloy before the start of cooling is preferably 950°C or higher, for example 1000°C or higher. As described above, an FCC-based alloy produced from an Fe-Cr-Co-based alloy material having the composition of the present invention has a lower hardness than conventional FCC alloys, and it has a hardness of about 300 Hv in terms of Vickers hardness after being cooled in an ordinary method for manufacturing a rolled magnet, which still is not suitable for cold closed die forging. It was found that it is possible to realize a low hardness of about 200 to 220 Hv at the state as cooled, and about 200 to 260 Hv, preferably 210 to 240 Hv, after the cold drawing step and before the cold closed die forging step, by increasing the cooling rate as compared with conventional techniques. In order to lower the Vickers hardness by controlling the cooling rate as described above, the composition range of the Fe-Cr-Co-based alloy material is preferably 8% to 12% by mass for Co and 20% to 30% by mass for Cr, and more preferably 22% to 28% by mass for Cr. After completion of hot forging and hot rolling, an oxide layer is peeled off the surface of the FCC-based alloy. Then, cold drawing is performed to produce a wire material having a diameter of 5 to 15 mm.

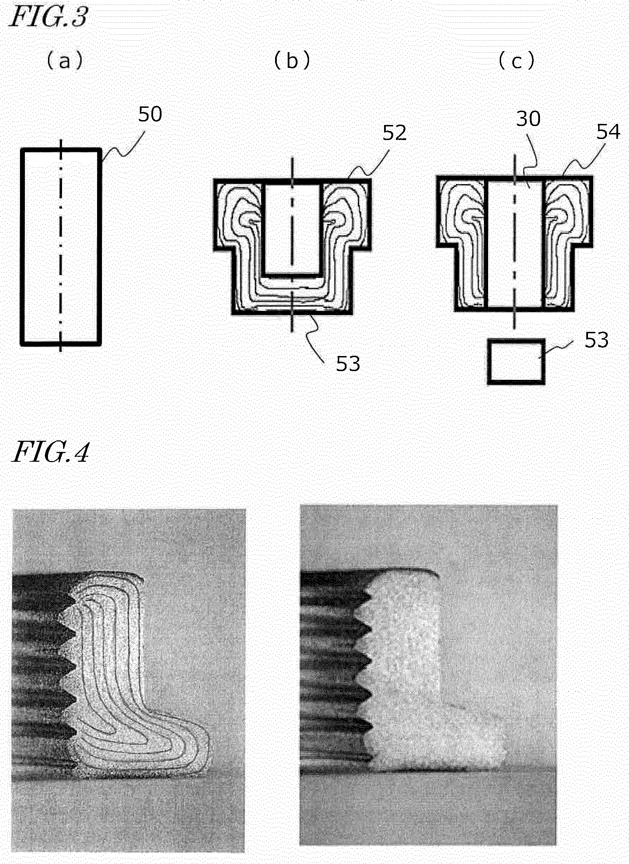

In step (B), the obtained wire material is cut into wire material pieces of an appropriate length (e.g., 2 to 10 mm), thus obtaining a rod-shaped FCC-based alloy **50** as shown in FIG. **3(a)****.** Thereafter, the rod-shaped FCC-based alloy **50** is subjected to closed die forging (cold forging) at normal temperature. Through the closed die forging, it is possible to produce, from the rod-shaped FCC-based alloy **50,** an intermediate structure **52** shown in FIG. **3(b)****,** for example, and then a nut-shaped FCC-based alloy **54** having a through hole therein as shown in FIG. **3(c)****.** In the illustrated example, the intermediate structure **52** has a depression with a bottom **53.** The intermediate structure **52** having such a shape can be produced by closed upset, semi-closed upset, forward extrusion, and/or backward extrusion, etc. The bottom **53** is punched out by a "punching process", or the like, thereby forming the through hole **30.** The process of the closed die forging shown in FIG. **3** may be performed continuously in the same cold forging apparatus, or may be performed in steps in different cold forging apparatuses. Such a closed die forging process can be performed in one to eight steps using dies of various shapes depending on the shape, etc., of the nut. The number of steps as used herein does not include the cutting step of FIG. **3(a)****,** but only includes the step of FIGS. **3(b)** and **3(c)****.** That is, "one step" means that the shaping and the punching are performed at once as shown in FIG. **3(c)****,** and "eight steps" means that the process of FIG. **3(b)** is performed in seven steps, followed by one step of punching shown in FIG. **3(c)****.** The wire material before being forged may be subjected to a lubricating process using cutting oil, or the like.

The process of closed die forging (cold forging) can be performed in one to eight steps, preferably two to six steps, and at a feed rate of 1000 to 10000 pieces/hour, for example. Normally, when a nut is produced by closed die forging from a material such as Fe, the number of steps is one to five and the feed rate is about 12000 pieces/hour. The forming force may be about 1.5 times that for Fe, and is about 90 kN for a nut-shaped FCC magnet shaped as shown in FIG. **1A** to FIG. **2** having an outer diameter of about 10 mm and a height of about 6 mm. Thus, a nut-shaped FCC magnet, which is more expensive than a nut made of Fe, can be produced with a far better production yield than when it is produced by casting or cutting. A product made by closed die forging has a surface roughness Ra of less than 3 µm, for example.

In step (C), a tapping process is performed to thread the inner wall surface of the through hole of the nut-shaped FCC-based alloy **54,** thus producing a nut-shaped FCC-based alloy material. Since the forging and thread cutting process forms the final shape of the nut-shaped FCC magnet, there is no need for processes such as grinding and polishing after the forging and thread cutting process. A surface polishing process such as sandblasting may be performed as a finishing process on the outer surface. Note that an FCC magnet that is obtained by performing a heat treatment of step (D) on a forged FCC alloy before the thread cutting process without performing step (C) can be used in the application of the present invention. In such a case, the FCC magnet can be used while fastening the FCC magnet using a general-purpose nut. The term "nut-shaped FCC magnet" as used herein refers also to such an FCC magnet that is not subjected to the thread cutting process.

In step (D), the obtained nut-shaped FCC-based alloy material is subjected to various heat treatments such as a solution treatment, thereby obtaining a nut-shaped FCC magnet. Specifically, a solution treatment, a heat treatment in magnetic field and an aging process are performed.

In the solution treatment, the temperature of the nut-shaped FCC-based alloy material is held in the range of 600°C or more and 950°C or less, preferably 700°C or more and 850°C or less, for 10 min or more and 20 min or less, for example, in a vacuum or reduced pressure atmosphere or in an oxidizing atmosphere (typically, in the air). Through the solution treatment, the FCC-based alloy reaches a state where it is composed of a solid solution (α phase) of a ferromagnetic element and a non-magnetic element.

In the heat treatment in magnetic field, the temperature of the material being processed is held in the range of 600°C or more and 700°C or less, preferably in the range of 620°C or more and 660°C or less, for 60 min or more and 90 min or less, for example, in an electric field of 200 kA/m or more, for example. By the heat treatment in magnetic field, spinodal decomposition proceeds, and the FCC-based alloy separates into two phases, i.e., the α1 phase (FeCo ferromagnetic phase) and the α2 phase (Cr non-magnetic phase). When the spinodal decomposition proceeds, because of the application of an electric field, the ferromagnetic α1 phase grows long while being aligned with the direction of the electric field. As a result, shape magnetic anisotropy can be exhibited. The atmosphere for the heat treatment in magnetic field may also be the air.

The aging process is performed in the temperature range of 400°C or more and 670°C or less. The aging process preferably includes a step of controlled cooling performed at a temperature-decreasing rate of 1°C to 7°C per hour, or preferably 2°C to 6°C per hour, from the aging process start temperature (e.g., 570°C to 670°C), which is about 5°C to 30°C lower than the temperature of the heat treatment in magnetic field, to the aging process end temperature (e.g., 400°C to 600°C). The temperature may be once decreased below the aging process start temperature from the temperature of the heat treatment in magnetic field. In such a case, cooling is started after the temperature is increased to the aging process start temperature. This increases the composition difference between the α1 phase and the α2 phase, thereby realizing a separation between the FeCo-rich phase and the Cr-rich phase. Therefore, it is possible to grow the α1 phase more in the electric field direction and increase the coercive force. The atmosphere of the aging process may also be in the air.

The FCC magnet has a property of being magnetized by mechanical shock. Therefore, if a finishing process is performed, for example, after the heat treatment, magnetized polishing powder is strongly stuck on the magnet surface, thereby requiring post-process demagnetization and thorough cleaning using a jet, or the like. With the nut-shaped FCC magnet of the present disclosure, the final shape is obtained before the heat treatment, i.e., at the time of the forging and thread cutting process, and there is no need to perform a machining process such as a finishing process or a demagnetization process after the heat treatment. Patent document 5 describes that the forging process is performed on the end portion of the wire-shaped FCC magnet. However, if the forging process is performed after the heat treatment including the solution heat treatment and the heat treatment in the magnetic field, there is a problem that the magnetic force is reduced due to the stress caused by the process.

When a nut-shaped FCC magnet is produced by casting, a cast magnet has a coarse structure and it is not possible to realize a high strength. With the steps described above, however, it is possible to realize an alloy with good crystalline uniformity by repeating hot forging, hot rolling, etc., from an alloy that contains little impurity obtained by vacuum melting. However, if one attempts to produce a nut by a cutting process from such an alloy, the production efficiency is as low as several pieces per hour and the production yield is also as low as about 30% because of a significant amount of the waste material during the cutting process. In contrast, according to the step of the present invention, the production efficiency is about 5000 pieces/hour, for example, and the waste material only includes portions that are punched out during the forging process and shavings from the thread cutting process, thus realizing a method for manufacturing a nut-shaped FCC magnet with a high production efficiency and a high production yield. Note that while most of the waste material is the portions that are punched out during the forging process, the portions can easily be re-melted. The nut-shaped FCC magnet thus produced can be used while being screwed to the rotor of the turbocharger after being magnetized to have two poles, for example.

The nut-shaped FCC magnet according to the embodiment of the present disclosure has a fiber flow that extends along the outer shape obtained by cold forging. Particularly, with a nut-shaped FCC magnet that has a step on the outer side, such as a nut-shaped FCC magnet that is screwed to the rotor of the turbocharger, the crystalline structure extends along the shape of the step portion, thus realizing a high mechanical strength. The FCC magnet did not crack even during a high-speed rotation test, proving that it could sufficiently endure high-speed rotation of the magnetic sensor. This is considered to be due to the crystalline structure that is peculiar to cold forged products. Specifically, the structure that is plastically deformed by cold forging becomes finer, and the fibrous structure generated by forging (the metal flow lines or the fiber flow) extends long without being cut off. Such a structure enhances mechanical strength and wear resistance. FIGS. **3(b)** and **3(c)** schematically illustrate the fiber flow.

The right-side photograph of FIG. **4** shows a cross section of a nut-shaped FCC magnet produced by closed die forging, and the left-side photograph of FIG. **4** shows, in a schematic and exaggerated manner, the fiber flow that appears on the cross section of the nut-shaped FCC magnet. In this photograph, a nut-shaped FCC magnet is cut to expose a cross section and is immersed in 5% nital (alcohol + 5% nitric acid) for one hour to etch the cross section so that the fiber flow can be observed. As shown in FIG. **4****,** the nut-shaped FCC magnet produced according to the embodiment of the present disclosure has a fiber flow that extends along the outer shape obtained by cold forging, and this structure increases the mechanical strength.

### EXAMPLES

An example of a nut-shaped FCC magnet was produced according to the method of the embodiment described above. Specifically, an Fe-Cr-Co-based alloy magnet material containing 10% by mass of Co, 24% by mass of Cr, 1% by mass of Ti, and 1% by mass of V, with the balance being Fe with the balance being Fe was prepared and subjected to steps including vacuum melting, hot forging, hot rolling, peeling and cold drawing. Note that the temperature of the Fe-Cr-Co-based alloy magnet material after hot rolling was 1100°C, and it was cooled by immersing it in stirred cooling water at 20°C. After about 1 minute, the Fe-Cr-Co-based alloy magnet material was taken out after the temperature thereof reached 50°C (cooling rate 1050°C/min). The Vickers hardness of the Fe-Cr-Co-based alloy magnet material was 200 Hv when the cooling step was completed, and it increased to 240 Hv after the cold drawing step was carried out. Through these steps, a wire material having a diameter of 9 mm was obtained from the FCC-based alloy. The wire material was subjected to closed die forging at normal temperature. Specifically, the wire material was cut into rod-shaped pieces, which were each formed into a structure having a shape shown in FIG. **3(c)****,** in three steps using a forming force of 90 kN and at a feed rate of 5000 pieces/hour. Then, a tapping process was performed to thread the inner surface, thus producing a nut-shaped FCC-based alloy. At the time of completing the shape through these mechanical processes, the nut-shaped FCC-based alloy material does not yet function as a magnet.

The obtained nut-shaped FCC-based alloy material was subjected to a solution treatment at a temperature of 850°C in the air. Next, a heat treatment in magnetic field at a temperature of 650°C was performed, and then an aging process was further performed by gradual cooling from 650°C to 500°C, thereby producing the nut-shaped FCC magnet of the present example. In the present example, the material production yield was about 75%. The waste material (about 25%) only includes portions that are punched out during the forging process and shavings from the "thread cutting process", indicating a remarkably high production yield. The production efficiency was 5000 pieces/hour.

A nut-shaped FCC magnet of a reference example was produced by machining a cylindrical material of an FCC-based alloy into a nut shape through a cutting process, instead of the cutting/closed die forging step of the present example. In the reference example, steps other than the form-giving machining process were similar to those of the example described above. The production yield of the reference example was about 25%. Since a cylindrical material is shaped through cutting, there is a larger amount of shavings, thereby lowering the production yield. In the reference example, the production efficiency was also far poorer, at 5 pieces/hour, than the example described above.

The embodiment of the present invention can suitably be used in a magnetic sensor for detecting the rotational speed of a part (a rotor or a rotating member) that rotates at a high speed such as the rotor of a turbocharger, for example.

## Claims

1. A method for manufacturing a nut-shaped FCC magnet, the method comprising:
producing a rod-shaped FCC-based alloy from an Fe-Cr-Co-based alloy material containing 5% to 14% by mass of Co, 20% to 40% by mass of Cr, 5% or less of an additional element, with the balance being Fe;
producing a nut-shaped FCC-based alloy having a through hole therein by cold closed die forging from the rod-shaped FCC-based alloy; and
performing a heat treatment on the nut-shaped FCC-based alloy, thereby obtaining the nut-shaped FCC magnet.

2. The method for manufacturing a nut-shaped FCC magnet according to claim 1, comprising performing a thread cutting process of forming a thread on an inner wall of the through hole of the nut-shaped FCC alloy, wherein the heat treatment is performed on the nut-shaped FCC alloy having been subjected to the thread cutting process.

3. The method for manufacturing a nut-shaped FCC magnet according to claim 1 or 2, wherein a Vickers hardness of the rod-shaped FCC-based alloy before the cold closed die forging is 200 to 240 Hv.

4. The method for manufacturing a nut-shaped FCC magnet according to any one of claims 1 to 3, wherein the step of producing the rod-shaped FCC-based alloy from the Fe-Cr-Co-based alloy material includes hot forging, hot rolling, peeling and cold drawing of an ingot of the Fe-Cr-Co-based alloy material.

5. The method for manufacturing a nut-shaped FCC magnet according to claim 4, wherein in the step of producing the rod-shaped FCC-based alloy from the Fe-Cr-Co-based alloy material, a Vickers hardness of the rod-shaped FCC-based alloy is controlled within a range of 200 to 240 Hv by adjusting a cooling rate after the hot forging and/or the hot rolling.

6. The method for manufacturing a nut-shaped FCC magnet according to claim 5, wherein the Fe-Cr-Co-based alloy material contains 8% to 12% by mass of Co, 20% to 30% by mass of Cr, 5% or less of an additional element, with the balance being Fe.

7. The method for manufacturing a nut-shaped FCC magnet according to claim 5 or 6, wherein the cooling rate after the hot forging and/or the hot rolling is 400°C/min to 1500°C/min.

8. The method for manufacturing a nut-shaped FCC magnet according to any one of claims 1 to 7, wherein the heat treatment includes a solution treatment and a heat treatment in magnetic field.

9. The method for manufacturing a nut-shaped FCC magnet according to any one of claims 1 to 7, wherein the heat treatment includes:
performing a solution treatment at a temperature of 600°C or more and 950°C or less on the nut-shaped FCC-based alloy;
performing a heat treatment in magnetic field at a temperature of 600°C or more and 700°C or less on the nut-shaped FCC-based alloy; and
performing an aging process at a temperature of 400°C or more and 670°C or less on the nut-shaped FCC-based alloy.

10. The method for manufacturing a nut-shaped FCC magnet according to any one of claims 1 to 9, comprising shipping the nut-shaped FCC magnet without performing a machining step and/or a demagnetization step after the aging process.

11. The method for manufacturing a nut-shaped FCC magnet according to any one of claims 1 to 10, wherein the additional element is at least one element selected from the group consisting of Ti, Mo, V, Si and Al.

12. A nut-shaped FCC magnet containing 5% to 14% by mass of Co, 20% to 40% by mass of Cr, 5% or less of an additional element, with the balance being Fe, and having a fiber flow that extends along an outer shape on an outer circumferential side of the nut shape.

13. The nut-shaped FCC magnet according to claim 12, comprising:
a plurality of side surfaces that define the nut shape; and
a step portion that expands from the plurality of side surfaces in a direction perpendicular to a central axis of the nut-shaped FCC magnet,
wherein the nut-shaped FCC magnet has a fiber flow that extends along an outer shape of the step portion.

14. The nut-shaped FCC magnet according to claim 12 or 13, obtainable or obtained from the method of one of claims 1 to 11.

15. Use of the nut-shaped FCC magnet of one of claims 12 to 14, or manufactured according to one of claims 1 to 11, for a magnetically sensing member of a rotational speed sensor, such as for a turbocharger.
